# EUROPEAN PATENT SPECIFICATION

(11) **EP 0 890 373 B1**
(45) Date of publication and mention of the grant of the patent: **18.02.2004**
(21) Application number: 98111264.2
(22) Date of filing: 18.06.1998
(51) Int. Cl.: A63B 6/00, B32B 7/02, B32B 5/32

(54) **Interlocking modular element carpets for sport matches such as wrestling, karate, judo and the like and a method for making same**
Ineinandergreifende modulare Sportmatten sowie Verfahren zu deren Herstellung
Tatami de sport à éléments modulaires emboîtables ainsi que le procédé de sa production

(30) Priority: 07.07.1997 IT MI971603
(43) Date of publication of application: 13.01.1999
(73) Proprietor: Trocellen Italia S.p.A.., 24040 Osio Sopra (BG) (IT)
(72) Inventor: Zanda, Luciano, 24100 Bergamo (IT)
(74) Representative: Klausner, Erich

(56) References cited:
- DE-A- 1 963 304
- DE-A- 2 003 683
- US-A- 3 709 966

## Description

The present invention relates to a rigid carpet, to be laid on the floor of an area, for performing thereon particular sport matches such as wrestling, judo, karate and the like, said rigid carpet being formed by interlocking modular elements.

The above mentioned carpets, for example the so-called "tatamis", have a size which defines the limits of the area within which the match should take place and they must meet several particular requirements, namely:
- provide good friction between their lower surface and the supporting floor in order to prevent undesirable displacements of the carpet in the course' of the match, which would negatively affect the performance of the competitors;
- provide a non-slippery trampling surface and at the same time withstand a localized compression to prevent the competitors' feet from excessively sinking into the carpet and a possible unbalance of the competitors as well as too great a reduction of the force applied by the competitors' bodies;
- yet provide a sufficient resilient dampening in order to mitigate the impacts in case of falls.

Recently, single-layer polymeric foam material carpets have been made which, however, though varying in density, thickness and type, have not made it possible to reconcile, in the best manner desired, the opposing requirements of surface stiffness and surface consistency with an appropriate resilience for a localized impact thereupon. See also DE 20 03 683 A wherein multilayer carpets are disclosed and DE 19 63 304 A showing carpets consisting of modular elements which can be assembled.

The object of the present invention is to realize a modular carpet provided with a sufficiently rigid trampling surface to prevent the competitors' feet from excessively sinking into a localized area of the carpet, while exhibiting a sufficient overall resilience to prevent parts of the competitors' body, such as shoulders, wrists, hands and head, from being damaged in case of falls, said carpet consists of modular elements which can be mutually coupled by peripheral male and female indentations which can be joined to one another by a groove-and-tongue fitting.

According to the invention, after extensive tests, a very satisfactory compromise has been achieved by using carpets consisting of multi-layer panels, in particular of three or more layers, made of a polymeric closed cell foam material, wherein the outer layers have preferably the same composition as, and a greater density than, the inner layer or layers formed by a less dense foam material which, consequently, will have a greater deformability and resilience.

The carpet according to the present invention is made of modular elements provided with corresponding peripheral indentations which allow the elements of the carpet to be easily engaged and disengaged, to be easily stored - when not in use - in a very restricted space, as well as to be easily transported and subjected to maintenance, washing or replacement, if damaged.

The patent contemplates that the outer layers be differently coloured in order to have available, at will, a surface, exposed to the view, of the colour desired, or even to form an aesthetically pleasing surface provided with alternating panels in a chessboard pattern.

The invention also provides that, during the production stage of the carpet, the foam material surface layer, of greater density, to be exposed to the view or arranged in contact with the floor, be embossed in order to roughen its surface or that, alternatively, said layer be coated with an embossed film. A method for making a carpet for sport matches provides for bonding to one another the two outer layers of a closed cell foam material having a substantially high density, between said outer layers being sandwiched at least one layer of material of lower density, e.g. by thermosealing or any other known methods.

The invention shall now be described in detail having reference by way of example to an embodiment thereof, and to the drawings attached hereto wherein:
Figure 1 is a cross-sectional view of a panel element for a carpet intended for sport matches, according to the invention;
Figure 2 illustrates a series of diagrams relating to a polyethylene closed cell foam material of different densities, showing how the compression percent varies with respect to the applied pressure;
Figure 3 is a schematic top plan view of the peripheral indentations provided on two panel elements which allow said panel elements to be engaged in groove-and-tongue relationship in order to form, with a plurality of further like elements, a carpet having the desired dimensions;
Figure 4 is a top plan view of two joined panels provided with the indentations shown in Figure 3;
Figure 5 illustrates a linear border ledge to be joined by indentations for completing the peripheral border of a carpet according to the invention;
Figure 6 illustrates a bordering ledge element forming an angle for a carpet according to the invention; and
Figure 7 illustrates the constructional geometrical principle of the groove-and-tongue indentations adopted in the elements of the carpet according to the invention.

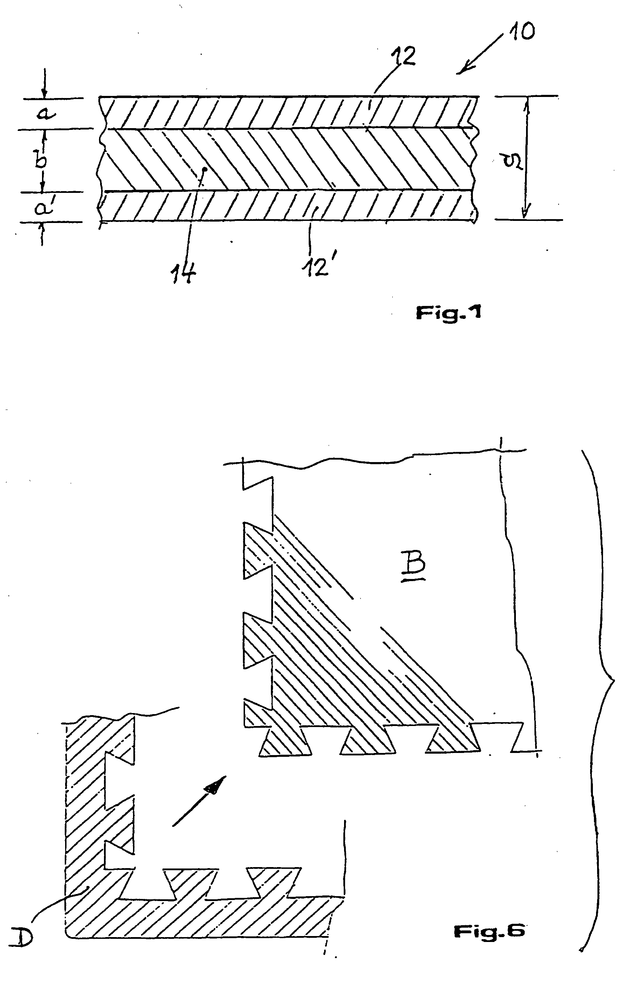

Figure 1 is a cross-sectional view of a modular carpet panel element according to the present invention, indicated by the numeral 10, which element, in this embodiment, consists of three superimposed layers 12, 14, 12', having respective thickness a, b, a'.

From test performed, it has been found that the thickness a, a' of the outer layers 12, 12', for example made of a polyethylene closed cell foam material, can vary from 5 to 25 mm, preferably from 10 to 20 mm, whereas the thickness b of the middle layer 14, for example made of a polyethylene closed cell foam material, must be greater and it can vary up to 2.5 times the thickness a of the top layer, preferably of from 1.5 to 2 times said thickness a.

Generally, the thickness of the outer layers 12, 12' may also be different, and this can prove useful when the carpet is meant to be used for matches between two competitors of very different weight. In most cases, the thickness a and a' of the layers 12, 12' will preferably be the same, so as to allow the carpet to be reversed, while maintaining like physical properties.

Figure 1 illustrates, in particular, an embodiment by way of example of a carpet panel in which the layers 12, 12' have the same thickness of 10 mm, and a thickness b of the middle or inner layer 14 is of 15 mm. The total thickness S, in this case, is of 35 mm, with possible variations within the range of from 15 to 70 mm, depending on the type of match.

With respect to the carpet materials, it has been found that a suitable material is cross-linked closed cell foam polyethylene (PE), which can be made having a wide range of densities, varying, for example, from 25 to 200 kg/m³ and having different physical properties of compression and tensile strength.

Good results have been obtained by using a PE material of different densities, as sold by the very Applicant under the commercial tradename "POREX", and, more specifically, by using for the stiffer outer layers a density of from 30 to 200 kg/m³ and for the inner layer 14 a density ranging from 25 to 50 kg/m³.

The inner layer 14 is preferably made of a single density material, within the above mentioned range; however, it may also be formed by several layers, having even different densities.

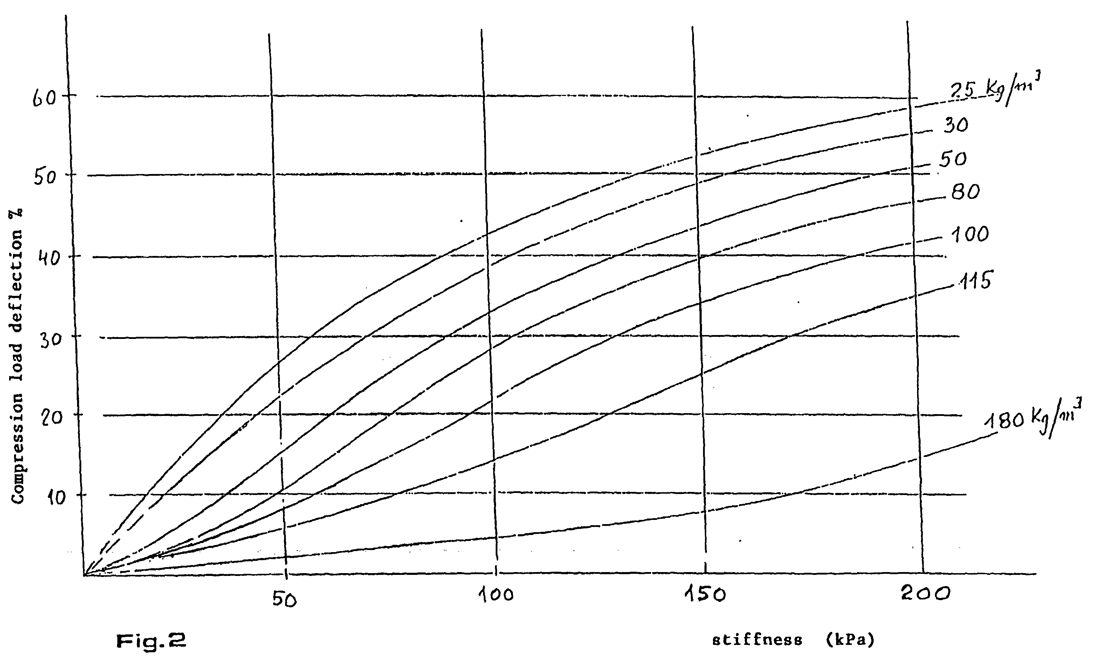

Figure 2 shows several typical diagrams related to a polyethylene closed cell foam material of different densities.

From these diagrams it can be taken that for the embodiment cited by way of example in Figure 1, wherein:
a = a' = 10 mm with POREX material having a density of 120 kg/m³
b = 15 mm with POREX material having a density of 30 kg/m³
to a localized impact of about 200 kPa, i.e. of about 200 kg/dm², there corresponds a depression of 40% of the layer a, i.e. a sinking of 4 mm of the outer layer and of 55% of the layer b, i.e. a sinking of 8.20 mm (of the inner layer) for a total of 12.2 mm, which values justify the dampening of the impacts encountered in practice, as compared with a normal sinking caused by a normal trampling by a person having a weight of 75 kg, which, under a pressure of about 25 kg/dm², causes a deflection of the carpet surface of about 1.5 mm.

The aim of providing a carpet having a multi-layer structure according to the present invention, is that of reconciling the opposite requirements of making a structure having generally a sufficient surface stiffness to allow the competitors to keep their balance and to thrust themselves forward in an upright condition, while at the same time having a sufficient inner resilience to dampen impacts in case of falls, thereby preventing the competitor's body from suffering contusions or fractures.

From practical tests it has been found that a localized impact on the layer 12 of greater density, which can originate dynamic pressures greater than 150 kPa, is diffused and dampened thanks to the resilient deflection of said layer 12 made possible by the yielding of the lower density inner layer 14.

The carpet according to the present invention is made of modular panels having either a rectangular or a square configuration and having such a size that they can be easily handled, transported and stacked.

The polyethylene closed cell cross-linked foam material, preferably used as construction material, has preferably a different colour for the outer layers 12, 12', so as to provide a carpet having a different colour on the top layer exposed to the view, when the carpet is reversibly laid on the floor.

The invention provides that the exposed surface of said outer layers 12, 12' right from the making of the semi-finished layer, be embossed in order to make it less slippery or, alternatively, that said surface be coated with a protective and reinforcing film made of an embossed polyethylene material.

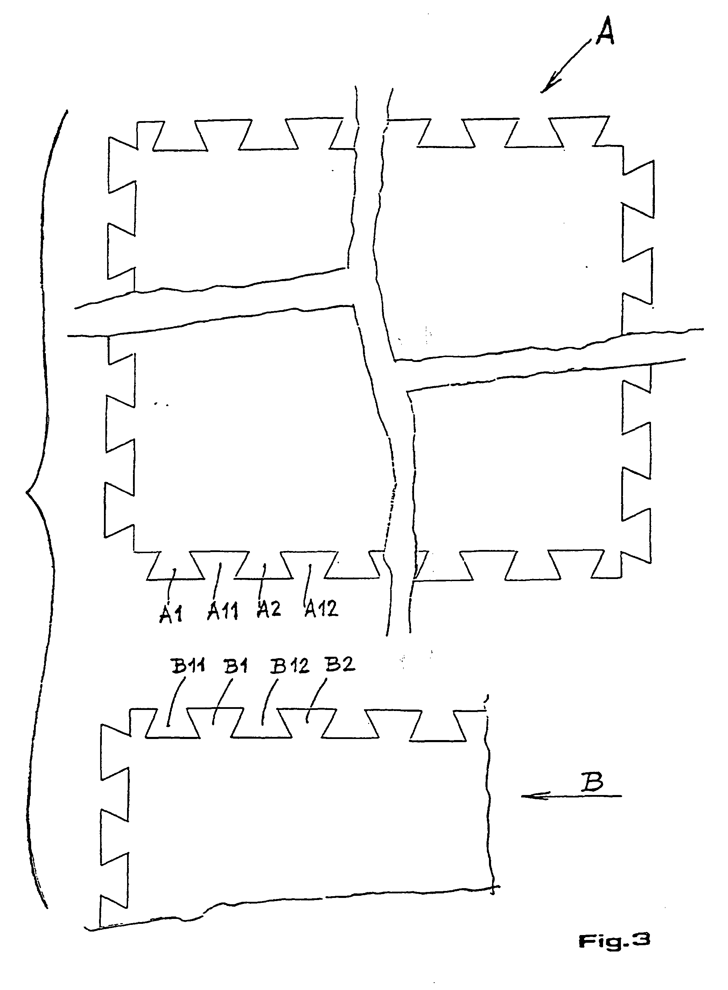

The modular carpet panels are peripherally indented according to a pattern of symmetrical groove and tongue joined elements, as schematically shown in Figure 3, which is a top view showing the corner regions of two panels A and B to be coupled to one another along their respective sides.

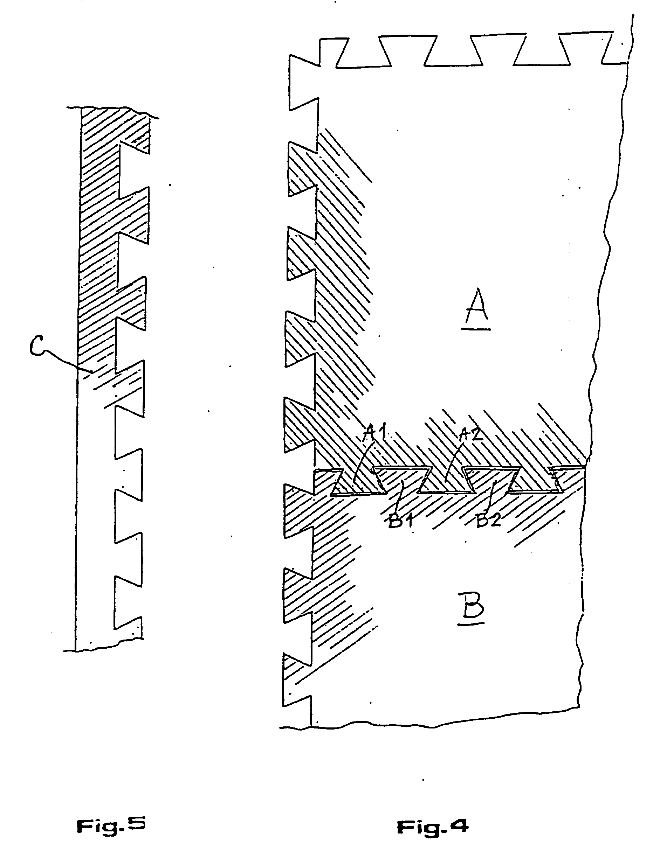

By fitting the male portions A1, A2.....of the panel A into the corresponding recesses B11, B12,....of the panel B and vice versa, the panels can be accurately coupled to each other, as shown in Figure 4, wherein, on the left side of the figure, is left free an indented ledge, which can engage other panels for completing the carpet or, in the case of an outer panel, the latter can be completed by a side bordering ledge C, shown in Figure 5, having an inner periphery with groove and tongue indentations and a linear outer periphery, which is supplied together with the panels.

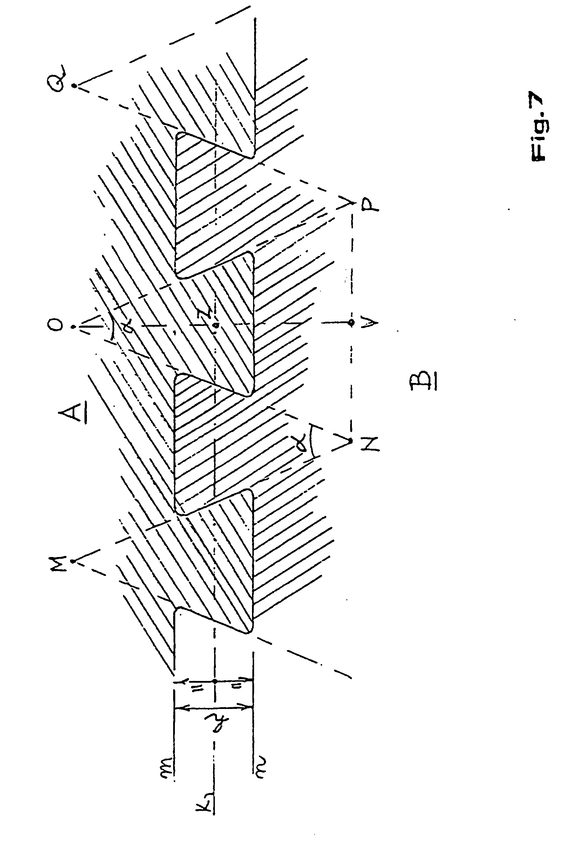

In addition to the linear bordering ledge indicated by C in Figure 5, there are also provided complementary bordering elements D (Figure 6) having, at their inner surface, indentations which can be arranged at the corners of the panels A and B shown in Figure 4 and which have smooth outer sides, forming an angle of 90°.

The groove-and-tongue elements schematically shown in Figures 3, 4, 5 are made according to a geometrical pattern so that the faces of the male and female elements, which will contact one another in order to provide a homogeneous transmission of the stresses developed between two adjoining panels, form an angle of 45°.

As shown in Figure 7, in order to meet the above mentioned geometry with angles of 45° of the side surfaces of the groove-and-tongue elements A1, A2... and B1, B2... connecting the adjacent panels A and B or bordering ledges C and D, said elements are formed by following the trail of a theoretical indentation provided with saw teeth in which the angles α of the apexes M, N, O, P... all have the value of 45°. By selecting a suitable height h for the groove-and-tongue elements, said height is divided into like parts with respect to the theoretical middle joining line of the two panels, indicated by k, thereby obtaining the base lines m and n delimiting said groove-and-tongue elements, which will be equal to one another if the line k intersects at mid-height the isosceles triangles N-O-P or the like, as shown in Figure 7, wherein the point Z is arranged at the middle point of the height O-V of any triangles N-O-P.

In order to provide male and female groove-and-tongue fitting elements having walls which are perfectly flat and vertical, so as to obtain a coupling without any voids, the cut is preferably performed by a high pressure water jet, which has been found to be the sole inexpensive and quick cutting system apt to prevent a curved cutting of the surfaces which would otherwise be inevitable if the cutting were performed by a conventional die cutting operation on a yieldable materials such as a polymeric foam material.

Obviously, in order to prevent the formation of sharp corners, the indentations exibit a rounded configuration as shown in Figure 7.

The opposite corners of each panel have been designed to be the same (see Figure 3), for example the bottom left corner and top right corner of the panel elements A, B... will form a W-shaped recess corresponding to two adjacent halves of the female recess, whereas the left top corner and right bottom corner will form a V-shaped recess corresponding to a half female recess.

As materials to be used for making the carpet according to the present invention, in addition to polyethylene, also other foam materials, e.g. polypropylene, polyurethanes or other known compounds suitable for making foam materials, can be employed.

## Claims

1. A carpet for special sport matches such as wrestling, judo, karate and the like, wherein said carpet consists of modular elements (10), each of which comprising at least three layers (12, 14, 12') of a polymeric closed cell foam material, the outer layers (12, 12') having a density greater than that of the inner layer (14) in order to provide an assembly which is comparatively rigid under a normal trampling condition and sufficiently yielding in case of localized impacts, caused by falls of the competitors, which modular elements can be mutually coupled by peripheral male and female indentations which can be joined to one another by a groove-and-tongue fitting.

2. A carpet according to Claim 1, wherein the elastomeric foam material forming the layers of the modular elements of the carpet (10) may be any suitable closed cell foam material, such as polyethylene, polypropylene, polyurethanes and the like, preferably polyethylene.

3. A carpet according to Claims 1 and 2, wherein the density of the outer layers (12, 12') of the modular element (10) varies from 30 to 200 kg/m³.

4. A carpet according to Claims 1 to 3, wherein the density of the inner layer or layers (14) of the modular elements varies from 25 to 50 kg/m³.

5. A carpet according to Claims 1 to 4, wherein the thickness (a, a') of the outer layers (12, 12') of the modular elements varies from 5 to 25 mm, preferably from 10 to 20 mm.

6. A carpet according to Claims 1 to 5, wherein the thickness (b) of the inner layer (14) of the modular elements varies from 1 to 2.5 times the thickness (a, a') of the outer layers, preferably from 1.5 to 2 times said thickness (a, a').

7. A carpet according to Claims 1 to 6, wherein the outer layers (12, 12') of the modular elements are of different colours.

8. A carpet according to Claims 1 to 7, wherein the peripheral indentation of the individual male and female (A1, A2....; B11, B12....) modular elements preferably follows a groove-and-tongue pattern (Fig. 7) in the shape of isosceles triangles (N-O-P, O-P-Q), the sharp corners (N, O, P...) of which form an angle (α) of 45°, and in which the middle line (k) joining two panels (A and B) intersects the height (O V) of any said isosceles triangles (N O P...) at a middle point (Z), the height (h) of the grooves and tongues (A1, A2...) (B1, B2...) being symmetrically distributed at said joining middle line (k).

9. A carpet according to Claim 8, wherein that said grooves and tongues (A1, A2...) (B1, B2....) are preferably made by a high pressure water jet die cutting operation, so that the surface of the single tongue elements is flat and perpendicular to the outer surface of the panels, the sharp corners and recesses of the male and female elements respectively being rounded.

10. A carpet according to Claims 1 to 9, wherein the outer surfaces of the layers (12, 12') of the carpet modular elements are embossed or, alternatively, coated by an embossed polyethylene film.

11. A carpet according to Claims 1 to 10, wherein the thickness (a, a') of the modular element outer layers (12, 12') is the same.

12. A carpet according to Claims 1 to 10, wherein the thickness (a, a') is different.

13. A carpet according to one or more of the preceding claims, wherein the modular elements (10) consist of outer groove-and-tongue joined panels and of bordering ledges (C), as well as inner groove and tongue elements (D) forming an angle, having an outer linear periphery.

14. A method for making a carpet for sport matches, wherein it provides for bonding to one another the two outer layers of a closed cell foam material having a substantially high density, between said outer layers being sandwiched at least one layer of material of lower density, e.g. by thermosealing.

15. A method for making a carpet for sport matches according to Claims 14, wherein said multi-layer material is preferably cut by high pressure water jets to provide the modular elements (10) according to Claims 1 to 13.

## Patentansprüche

1. Ein Teppich für spezielle Sportveranstaltungen wie Ringen, Judo, Karate und ähnliche, wobei der genannte Teppich aus Modulelementen (10) besteht, von denen jedes mindestens drei Schichten (12, 14, 12') eines Polymerschaummaterials mit geschlossenen Zellen umfasst, und die äußeren Schichten (12, 12') eine Dichte aufweisen, die größer ist als die der inneren Schicht (14), um eine Einheit zu bilden, die unter normalen Begehungsverhältnissen vergleichsweise starr ist und bei durch Stürze der Wettkämpfer verursachten lokalen Aufprallen jeweils ausreichend nachgibt, und die Modulelemente jeweils durch Steck- und ausgesparte Auszackungen durch eine Feder- und Nutpassung miteinander verbunden werden können.

2. Ein Teppich gemäß Anspruch 1, bei dem das Elastomer-Schaummaterial, das die Schichten der Modulelemente des Teppichs (10) bildet, aus beliebigem, geeignetem Schaummaterial mit geschlossenen Zellen bestehen kann, wie Polyäthylen, Polypropylen, Polyurethane und ähnliche, vorzugsweise Polyäthylen.

3. Ein Teppich gemäß den Ansprüchen 1 und 2, wobei die Dichte der äußeren Schichten (12, 12') des Modulelements (10) von 30 bis 200 kg/m³ reicht.

4. Ein Teppich gemäß den Ansprüchen von 1 bis 3, bei dem die Dichte der inneren Schicht oder Schichten (14) der Modulelemente von 25 bis 50 kg/m³ reicht.

5. Ein Teppich gemäß den Ansprüchen von 1 bis 4, bei dem die Stärke (a, a') der äußeren Schichten (12, 12') der Modulelemente von 5 bis 25 mm, vorzugsweise von 10 bis 20 mm reicht.

6. Ein Teppich gemäß den Ansprüchen von 1 bis 5, bei dem die Stärke (b) der inneren Schicht (14) der Modulelemente von 1 bis 2,5 mal so stark wie die Stärke (a, a') der äußeren Schichten, vorzugsweise 1,5 bis 2 mal so stark wie die genannte Stärke (a, a') ist.

7. Ein Teppich gemäß den Ansprüchen von 1 bis 6, bei dem die äußeren Schichten (12, 12') der Modulelemente eine unterschiedliche Farbe aufweisen.

8. Ein Teppich gemäß den Ansprüchen von 1 bis 7, bei dem die Randauszackung der jeweiligen Steckund ausgesparten (A1, A2.....; B11, B12....) Modulelemente vorzugsweise einem Feder- und Nutmuster (Abb. 7) in der Form gleichschenkliger Dreiecke (N-O-P-, O-P-Q) folgt, dessen scharfe Kanten einen Winkel a mit 45° bilden, und bei dem die Mittellinie (k), die zwei Platten (A und B) verbindet, die Höhe (O V) eines beliebigen der genannten gleichschenkeligen Dreiecke (N O P....) an einem Mittelpunkt (Z) schneidet, wobei die Höhe der Federn und Nuten (A1, A2...) (B1, B2...) symmetrisch an der genannten Verbindungsmittellinie (k) verteilt ist.

9. Ein Teppich gemäß Anspruch 8, bei dem die genannten Federn und Nuten (A1, A2...) (B1, B2.... ) vorzugsweise durch Hochdruck-Wasserstrahl-Formschnitt hergestellt werden, so dass die Oberfläche der einzelnen Federelemente flach ist und senkrecht zur äußeren Oberfläche der Platten verläuft, wobei die scharfen Kanten und Rücksprünge der Steck- und ausgesparten Elemente jeweils abgerundet werden.

10. Ein Teppich gemäß Anspruch 1 bis 9, bei dem die äußere Oberfläche der Schichten (12, 12') der Teppich-Modulelemente geprägt oder wahlweise mit einem geprägten Polyäthylenfilm beschichtet sind.

11. Ein Teppich gemäß den Ansprüchen von 1 bis 10, bei dem die Stärke (a, a') der äußeren Schichten (12, 12') des Modulelements dieselbe ist.

12. Ein Teppich gemäß den Ansprüchen von 1 bis 10, bei dem die Stärke (a, a') unterschiedlich ist.

13. Ein Teppich gemäß einem oder mehreren der vorausgegangenen Ansprüche, bei dem die Modulelemente (10) aus äußeren, mit Feder und Nut verbundenen Platten und aus Einfassungsleisten (C) bestehen, sowie aus inneren Feder- und Nutelementen (D), die einen Winkel bilden und einen äußeren linearen Umfang aufweisen

14. Eine Methode zur Herstellung eines Teppichs für Sportveranstaltungen, bei der für die Verbindung der beiden äußeren Schichten eines Schaummaterials mit geschlossenen Zellen gesorgt wird, das eine im wesentlichen hohe Dichte aufweist, wobei zwischen den genannten äußeren Schichten über Heißsiegeln mindestens eine Schicht mit Material mit niedrigerer Dichte eingeschoben wird.

15. Eine Methode zur Herstellung eines Teppichs für Sportveranstaltungen gemäß Anspruch 14, bei der das genannte Vielschichtmaterial vorzugsweise durch Hochdruck-Wasserstrahl geschnitten wird, um die Modulelemente (10) gemäß den Ansprüchen von 1 bis 13 herzustellen.

## Revendications

1. Tapis pour rencontres sportives spéciales telles que le catch, le judo, le karaté et tous sports similaires, où ledit tapis consiste en des éléments modulaires (10), chacun d'entre eux comprenant au moins trois couches (12, 14, 12') de mousse polymère à cellules fermées, les couches extérieures (12, 12') ayant une densité supérieure à celle de la couche intérieure (14) de manière à réaliser un corps qui est comparativement rigide sous une condition normale de piétinement et suffisamment souple en cas d'impacts localisés, provoqués par les chutes des concurrents, dont les éléments modulaires peuvent mutuellement être accouplés par un ensemble d'entailles males et femelles périphériques qui peuvent être unies les unes aux autres au moyen de dispositifs de cannelures et de languettes.

2. Tapis selon la revendication 1, où la mousse élastomère formant les couches des éléments modulaires du tapis (10) peut être toute mousse à cellules fermées adéquate, telle que le polyéthylène, le polypropylène, les polyuréthanes et similaires, de préférence le polyéthylène.

3. Tapis selon les revendications 1 et 2, où la densité des couches extérieures (12, 12') de l'élément modulaire (10) varie entre 30 et 200 kg/m³.

4. Tapis selon les revendications allant de 1 à 3, où la densité de la couche intérieure ou des couches (14) des éléments modulaires varie entre 25 et 50 kg/m³.

5. Tapis selon les revendications allant de 1 à 4, où l'épaisseur (a, a') des couches extérieures (12, 12') des éléments modulaires varie entre 5 et 25 mm, de préférence entre 10 et 20 mm.

6. Tapis selon les revendications allant de 1 à 5, où l'épaisseur (b) de la couche intérieure (14) des éléments modulaires varie entre 1 et 2,5 fois l'épaisseur (a, a') des couches extérieures, de préférence de 1,5 à 2 fois ladite épaisseur (a, a').

7. Tapis selon les revendications allant de 1 à 6, où les couches extérieures (12, 12') des éléments modulaires ont différentes couleurs.

8. Tapis selon les revendications allant de 1 à 7, où l'ensemble d'entailles périphériques de chaque élément modulaire male et femelle (A1, A2... ; B11, B12...) suit de préférence un modèle de cannelures et de languettes (Fig. 7) ayant la forme de triangles isocèles (N-O-P, O-P-Q), dont les angles aigus (N, O, P...) forment un angle (α) de 45° et où la ligne médiane (k) joignant deux panneaux (A et B) croise la hauteur (O V) de tous triangles isocèles (N O P...) à un point médian (Z), la hauteur (h) des cannelures et des languettes (A1, A2...) (B1, B2...) étant distribuée symétriquement au niveau de ladite ligne médiane de jonction (k).

9. Tapis selon la revendication 8, où lesdites cannelures et languettes (A1, A2...) (B1, B2...) sont de préférence réalisées par une opération de découpage de matrices à l'aide de jets d'eau à haute pression, de sorte que la surface de chaque élément de languette est plane et perpendiculaire par rapport à la surface extérieure des panneaux, les angles aigus et les recoins des éléments males et femelles étant respectivement arrondis.

10. Tapis selon les revendications allant de 1 à 9, où les surfaces extérieures des couches (12, 12') des éléments modulaires du tapis sont en relief ou, en alternative, revêtues d'une couche de polyéthylène à relief.

11. Tapis selon les revendications allant de 1 à 10, où l'épaisseur (a, a') des couches extérieures de l'élément modulaire (12, 12') est identique.

12. Tapis selon les revendications allant de 1 à 10, où l'épaisseur (a, a') est différente.

13. Tapis selon une ou plusieurs revendications parmi les revendications susmentionnées, où les éléments modulaires (10) consistent en des panneaux extérieurs unis par des cannelures et des languettes et en des rebords (C), de même qu'en des éléments intérieurs de cannelures et de languettes (D) formant un angle, ayant une périphérie extérieure linéaire.

14. Méthode de fabrication d'un tapis pour rencontres sportives, où elle permet de relier entre elles les deux couches extérieures de mousse à cellules fermées ayant une densité substantiellement élevée, au moins une couche de matériau à densité plus basse étant comprimée entre lesdites couches extérieures par thermocollage étanche.

15. Méthode de fabrication d'un tapis pour rencontres sportives selon la revendication 14, où ledit matériau multicouche est de préférence découpé au moyen de jets d'eau à haute pression pour réaliser les éléments modulaires (10) selon les revendications allant de 1 à 13.
